# EUROPEAN PATENT APPLICATION

(11) **EP 4 141 784 A1**
(43) Date of publication of application: **01.03.2023**
(21) Application number: 20931908.6
(22) Date of filing: 21.04.2020
(51) Int. Cl.: G06T 7/00

(54) **MATCHING DEVICE, MATCHING SYSTEM, MATCHING METHOD, AND NON-TRANSITORY COMPUTER-READABLE MEDIUM STORING MATCHING PROGRAM**

(71) Applicant: NEC Corporation, 108-8001 Tokyo (JP)
(72) Inventor: HAMADA Yasushi, Tokyo 108-8001 (JP); KOMEIJI Shuji, Tokyo 108-8001 (JP)
(74) Representative: Betten & Resch
(86) International application number: PCT/JP2020/017150
(87) International publication number: WO 2021/214857

(57) **Abstract**

According to an example embodiment, a display apparatus (100) includes adjustment means (111) for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data, and display control means (112) for displaying the shot image of the inspection target person and a mark representing a visually recognizable second feature point to be specified from the registered image of the person in an overlapping manner on a display device.

## Description

### Technical Field

The some non-limiting embodiments relates to a comparison apparatus, a comparison system, a comparison method, and a non-transitory computer-readable medium storing a comparison program.

### Background Art

Patent Literature 1 discloses a system that compares a large number of persons registered in a database and a person reflected on a comparison source image. The system is provided with a function of overlapping a face image of the person as a candidate among the large number of persons registered in the database and a face image of the person reflected on the comparison source image to generate a composite image for a consistency check and displaying the composite image on a window.

### Citation List

### Patent Literature

Patent Literature 1 Japanese Unexamined Patent Application Publication No. 2001-273496

### Summary

### Technical Problem

In the system disclosed in Patent Literature 1, the face image of the person as a candidate among the large number of persons registered in the database and the face image of the person reflected on the comparison source image are only displayed in an overlapping manner, and it is insufficient to correctly determine whether or not the person as a candidate registered in the database and the person reflected on the comparison source image are the same person. That is, the system disclosed in Patent Literature 1 has a problem that it is still difficult to visually determine whether or not an inspection target person corresponds to a specific person.

The present disclosure has been made to solve the problem, and is directed to providing a comparison apparatus, a comparison system, a comparison method, and a non-transitory computer-readable medium storing a comparison program, which make it possible to facilitate visual determination whether or not an inspection target person corresponds to a specific person.

### Solution to Problem

A comparison apparatus according to the present disclosure includes adjustment means for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data, and display control means for displaying the shot image of the inspection target person and a mark representing a visually recognizable second feature point to be specified from the registered image of the person in an overlapping manner on a display device.

A comparison method according to the present disclosure includes an adjustment step of comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data, and a display control step of displaying the shot image of the inspection target person and a mark representing a visually recognizable second feature point to be specified from the registered image of the person in an overlapping manner on a display device.

A non-transitory computer-readable medium according to the present disclosure stores a comparison program for performing adjustment processing for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data, and display control processing for displaying the shot image of the inspection target person and a mark representing a visually recognizable second feature point to be specified from the registered image of the person in an overlapping manner on a display device.

### Advantageous Effects

The present disclosure can provide a comparison apparatus, a comparison system, a comparison method, and a non-transitory computer-readable medium storing a comparison program, which make it possible to facilitate visual determination whether or not an inspection target person corresponds to a specific person.

### Brief Description of the Drawings

Fig. 1 is a block diagram illustrating a configuration example of a comparison apparatus according to a first example embodiment.
Fig. 2 is a flowchart illustrating an operation of the comparison apparatus illustrated in Fig. 1.
Fig. 3 is a conceptual diagram for describing comparison processing by the comparison apparatus illustrated in Fig. 1.
Fig. 4 is a diagram illustrating an example of a plurality of feature points P1.
Fig. 5 is a block diagram illustrating a configuration example of a comparison system according to a second example embodiment.
Fig. 6 is a block diagram illustrating a configuration example of a shooting apparatus provided in the comparison system illustrated in Fig. 5.
Fig. 7 is a block diagram illustrating a configuration example of a face registration terminal provided in the comparison system illustrated in Fig. 5.
Fig. 8 is a flowchart illustrating a flow of face information registration processing in a face information DB provided in the comparison system illustrated in Fig. 5.
Fig. 9 is a block diagram illustrating a configuration example of a comparison apparatus provided in the comparison system illustrated in Fig. 5.
Fig. 10 is a flowchart illustrating an operation of the comparison apparatus illustrated in Fig. 9.
Fig. 11 is a conceptual diagram for describing comparison processing by the comparison apparatus illustrated in Fig. 9.
Fig. 12 is a diagram illustrating an example of a plurality of feature points P1.

### Example Embodiment

Example embodiments of the present disclosure will be described in detail below with reference to the drawings. In the drawings, the same or corresponding elements are assigned the same reference numerals, and repetitive description is omitted, as needed, to clarify description.

### <First Example Embodiment>

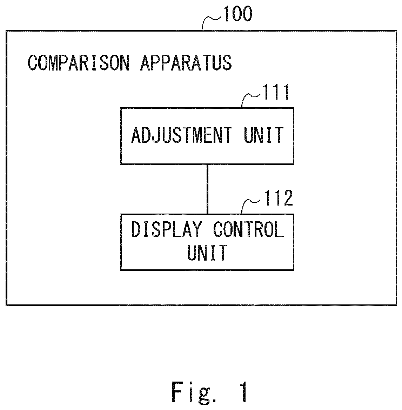

Fig. 1 is a block diagram illustrating a configuration example of a comparison apparatus 100 according to a first example embodiment.

The comparison apparatus 100 displays a shot image of an inspection target person TG and a mark MK representing a visually recognizable feature point (a mole, etc.) to be specified from a registered image of a candidate person RF extracted from a database as having a high possibility of being the same person as the inspection target person TG in an overlapping manner on a display device. This makes it easy to visually determine whether or not the inspection target person TG corresponds to a specific person (the candidate person RF in this example). The foregoing will be specifically described below.

As illustrated in Fig. 1, the comparison apparatus 100 includes an adjustment unit 111 and a display control unit 112. The comparison apparatus 100 is connected to a network 500 (not illustrated). The network 500 may be wired or wireless. A face information DB (database) not illustrated and a shooting apparatus (both are not illustrated) are connected to the network 500.

Respective image data on face regions of a plurality of persons are registered in the face information DB. Specifically, for each of the persons, a person ID (a user ID) and the image data on the face region of the person are registered in association in the face information DB. Examples of the persons registered in the face information DB include a person with a criminal record and a person under investigation.

Although a case where the image data on each of the persons registered in the face information DB is two-dimensional data including a face region facing the front and a shot image of an inspection target person TG shot by the shooting apparatus is two-dimensional data including a face region facing the front will be described in the present example embodiment, the some non-limiting embodiments are not limited to this. Although details will be described below, the image data on each of the persons registered in the face information DB may be three-dimensional data including a stereoscopic shape and an expanded image of a face region. In the case, the shot image of the inspection target person TG shot by the shooting apparatus may be two-dimensional data including a face region oriented in any direction.

The adjustment unit 111 adjusts a positional relationship between the shot image of the inspection target person TG shot by the shooting apparatus and a registered image, which is to be generated based on the image data on the person (candidate person) RF extracted from the face information DB as having a high possibility of being the same person as the inspection target person TG, of the candidate person RF. If the image data on each of the persons registered in the face information DB is two-dimensional data, as described above, it can be said that the image data on the candidate person RF extracted from the face information DB is the registered image of the candidate person RF. Although a case where extraction of the registered image of the candidate person RF is performed according to user's selection be described as an example in the present example embodiment, the extraction may be automatically performed using a face authentication apparatus.

For example, the adjustment unit 111 first compares a plurality of feature points (first feature points) P1 specified in a face region of the inspection target person TG extracted from the shot image and a plurality of feature points (first feature points) P1 specified in a face region of the candidate person RF extracted from the registered image.

The feature point P1 is a site of a face region commonly used to specify a face orientation of a person, and examples of the feature point P1 include a nasal root point, a nasal apex point, an oral opening midline point, a right eye upper center point, a left eye upper center point, a right earlobe point, and a left earlobe point.

The adjustment unit 111 adjusts a position of the registered image of the candidate person RF such that the plurality of feature points P1 in the face region of the inspection target person TG extracted from the shot image and the plurality of feature points P1 in the face region of the candidate person RF extracted from the registered image match each other.

A position of a visually recognizable feature point P2 to be specified in the face region of the candidate person RF is also adjusted as the position of the candidate person RF to be reflected on the registered image is adjusted. The visually recognizable feature point P2 is a portion, which is formed in the face region of the candidate person RF, specific to the candidate person RF, and examples of the feature point P2 include a mole, a wrinkle, a spot, a freckle, a dimple, a wart, a wound, and a tattoo. The feature point P2 need not be included in the feature point P1 used to adjust a positional relationship.

The feature portion P1 in the face region of each of the persons to be used in position adjustment by the adjustment unit 111 is not necessarily easy to visually confirm for humans. The feature portion P2 easy to visually confirm for humans is set as a highlighting display target, described below, to make it easy to determine whether or not the inspection target person TG is a specific person.

Although the type and the position of the feature point P2 may be registered in a face information DB 200 in association with the registered image (two-dimensional data) of the candidate person RF, the some non-limiting embodiments are not limited to this. The type and the position of the feature point P2 may be acquired at any timing based on the registered image (two-dimensional data) of the candidate person RF.

The display control unit 112 displays the shot image of the inspection target person TG and a mark MK representing the visually recognizable feature point P2 to be specified from the registered image of the candidate person RF after the adjustment in an overlapping manner on a display device.

The mark MK may be able to highlight the feature point P2, and examples of the mark MK to be used include a mark in a dotted line shape surrounding the feature point P2 and a mark in a shape and a pattern of the feature point P2 using a highlight color such as red. Further, as the mark MK, a mark in a display format (a highlighting content) corresponding to the type of the feature point P2 may be used. For example, a red mark MK may be used for the feature point P2 "mole", and a blue mark MK may be used for the feature point P2 "wrinkle". It is easier to visually confirm which of the plurality of feature points P2 has been highlighted.

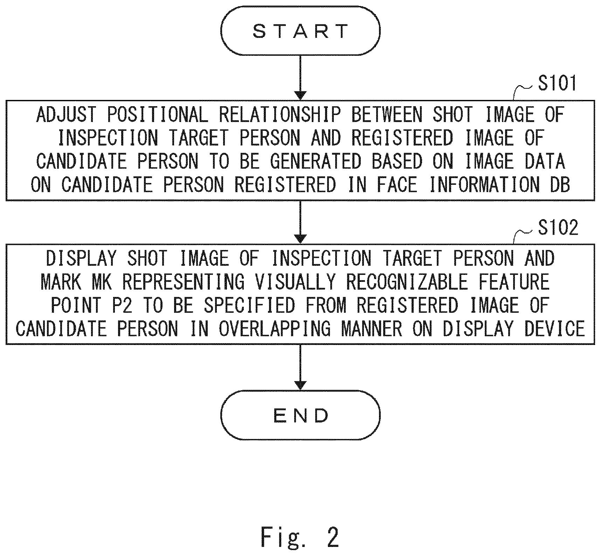

Fig. 2 is a flowchart illustrating an operation of the comparison apparatus 100.

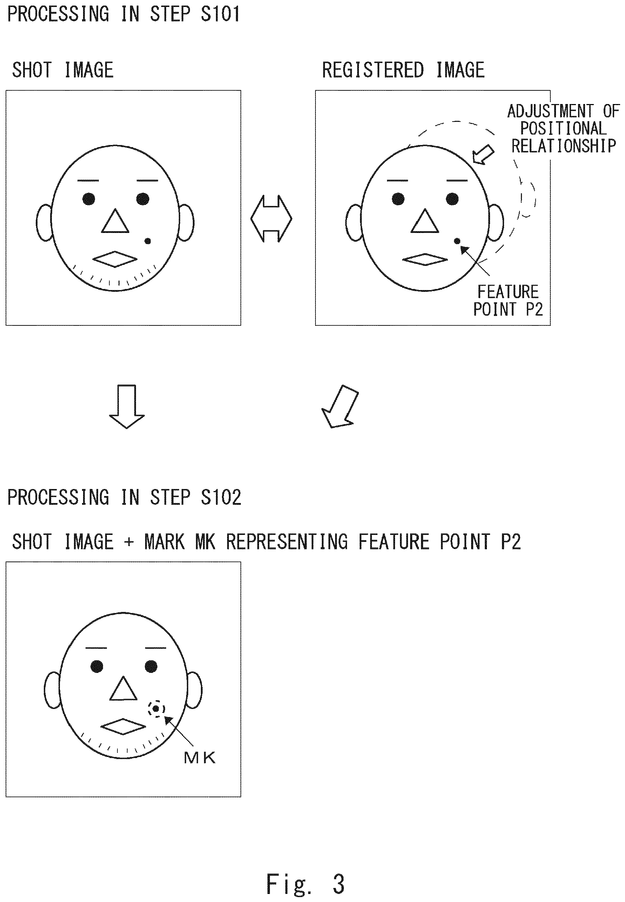

Fig. 3 is a conceptual diagram for describing comparison processing by the comparison apparatus 100.

First, the adjustment unit 111 adjusts a positional relationship between a shot image of an inspection target person TG shot by the shooting apparatus and a registered image, which is to be generated based on image data on a candidate person RF extracted from the face information DB, of the candidate person RF (step S101). If image data on each of persons registered in the face information DB is two-dimensional data, as described above, it can be said that the image data on the candidate person RF extracted from the face information DB is the registered image of the candidate person RF.

For example, the adjustment unit 111 first compares a plurality of feature points P1 specified in a face region of the inspection target person TG extracted from the shot image and a plurality of feature points P1 specified in a face region of the candidate person RF extracted from the registered image.

Then, the adjustment unit 111 adjusts a position of the registered image of the candidate person RF such that the plurality of feature points P1 in the face region of the inspection target person TG extracted from the shot image and the plurality of feature points P1 in the face region of the candidate person RF extracted from the registered image match each other.

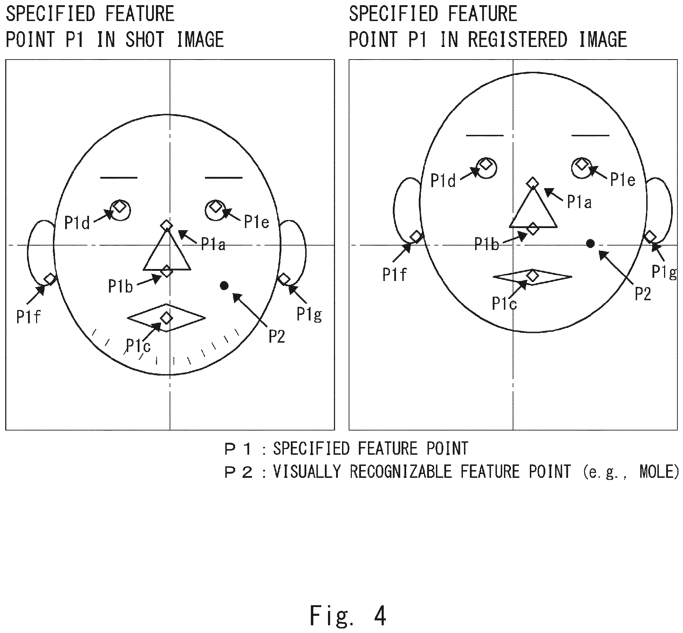

Fig. 4 is a diagram illustrating an example of a plurality of feature points P1.

Referring to Fig. 4, a nasal root point P1a, a nasal apex point P1b, an oral opening midline point P1c, a right eye upper center point P1d, a left eye upper center point P1e, a right earlobe point P1f, and a left earlobe point P1g are specified as a plurality of feature points P1, for example. At this time, the adjustment unit 111 adjusts a position of a registered image of a candidate person RF such that the feature points P1a to P1g in a face region of an inspection target person TG extracted from a shot image and the feature points P1a to P1g in a face region of the candidate person RF extracted from the registered image match each other.

Then, the display control unit 112 displays the shot image of the inspection target person TG and a mark MK representing a visually recognizable feature point P2 to be specified from the registered image of the candidate person RF after the adjustment in an overlapping manner on a display device (step S102).

Thus, the comparison apparatus 100 according to the example embodiment displays the shot image of the inspection target person TG and the mark MK representing the visually recognizable feature point (a mole, etc.) P2 of the candidate person RF to be specified from the registered image of the candidate person RF in an overlapping manner on the display device. This makes it easy to visually determine whether or not the inspection target person TG corresponds to a specific person (the candidate person RF in this example).

Although a case where the face information DB is provided outside the comparison apparatus 100 has been described in the present example embodiment, the some non-limiting embodiments are not limited to this. The face information DB may be provided inside the comparison apparatus 100.

The comparison apparatus 100 includes a processor, a memory, and a storage device as components not illustrated. The storage device stores a computer program on which processing in a guiding method according to the present example embodiment is mounted. The processor reads the computer program into the memory from the storage device, and executes the computer program. As a result, the processor implements respective functions of the adjustment unit 111 and the display control unit 112.

The adjustment unit 111 and the display control unit 112 may be each implemented by dedicated hardware. Some or all of the components in each of the apparatuses may be each implemented by general-purpose or dedicated circuitry, a processor, and their combination. The components may be each constituted by a single chip, or may be constituted by a plurality of chips connected to one another via a bus. Some or all of the components in each of the apparatuses may be each implemented by a combination of the above-described circuitry, for example, and a program. As the processor, a CPU (central processing unit), a GPU (graphics processing unit), an FPGA (field-programmable gate array), or the like can be used.

If some or all of the components in the comparison apparatus 100 are each implemented by a plurality of information processing apparatuses or circuits, for example, the plurality of information processing apparatuses or circuits, for example, may be arranged in a concentrated manner or arranged in a distributed manner. For example, the information processing apparatuses or circuits, for example, may be each implemented as a form to be connected via a communication network, such as a client server system or a cloud computing system. A function of the comparison apparatus 100 may be provided in a SaaS (software as a service) format.

### <Second Example Embodiment>

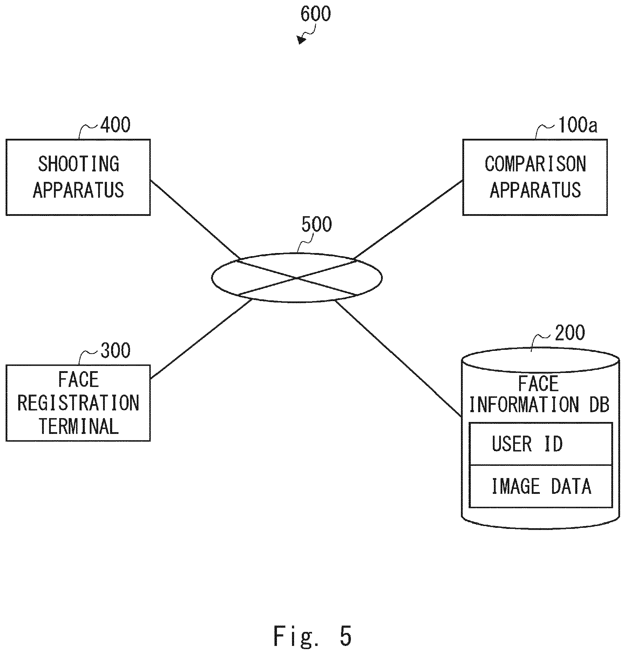

Fig. 5 is a block diagram illustrating a configuration example of a comparison system 600 according to a second example embodiment. The comparison system 600 is appropriately used to specify a person with a criminal record or a person under investigation, for example.

As illustrated in Fig. 5, the comparison system 600 includes a comparison apparatus 100a as a specific example of a comparison apparatus 100, a face information DB 200, a face registration terminal 300, a shooting apparatus 400, and a network 500. The comparison apparatus 100a, the face information DB 200, the face registration terminal 300, and the shooting apparatus 400 are connected to one another via the network 500.

### (Details of Shooting Apparatus 400)

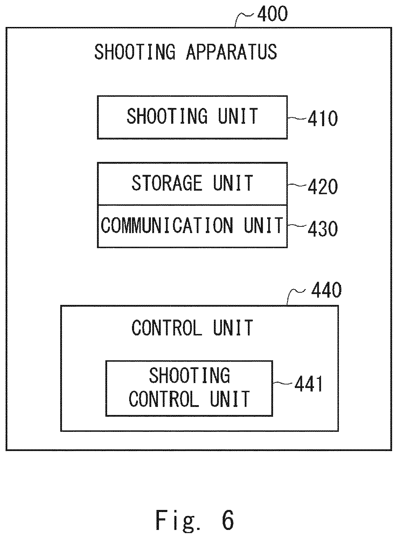

Fig. 6 is a block diagram illustrating a configuration example of the shooting apparatus 400.

As illustrated in Fig. 6, the shooting apparatus 400 includes a shooting unit 410, a storage unit 420, a communication unit 430, and a control unit 440.

The shooting unit 410 is a monitoring camera, for example, and shoots a face image of an inspection target person TG. The storage unit 420 is a storage device storing a program for implementing each of functions of the shooting apparatus 400. The communication unit 430 is a communication interface with the network 500. The control unit 440 controls hardware included in the shooting apparatus 400. Specifically, the control unit 440 includes a shooting control unit 441.

The shooting control unit 441 shoots the face image of the inspection target person TG using the shooting unit 410. A face region of the inspection target person TG to be shot by the shooting unit 410 need not face the front but may be oriented in any direction. The shooting control unit 441 transmits a shot image of the inspection target person TG shot by the shooting unit 410 to the comparison apparatus 100a via the network 500.

### (Details of Face Registration Terminal 300)

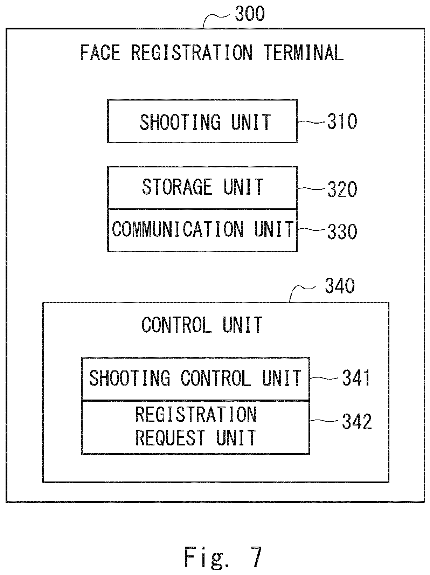

Fig. 7 is a block diagram illustrating a configuration example of the face registration terminal 300.

As illustrated in Fig. 7, the face registration terminal 300 includes a shooting unit 310, a storage unit 320, a communication unit 330, and a control unit 340.

The shooting unit 310 shoots a face image of any person including a person with a criminal record or a person under investigation. The storage unit 320 is a storage device storing a program for implementing each of functions of the face registration terminal 300. The communication unit 330 is a communication interface with the network 500. The control unit 340 controls hardware included in the face registration terminal 300. Specifically, the control unit 340 includes a shooting control unit 341 and a registration request unit 342.

The shooting control unit 341 shoots a face image of any person using the shooting unit 310. The shooting control unit 341 shoots a face region of each of persons at a plurality of angles using the shooting unit 310, for example. As a result, three-dimensional data including a stereoscopic shape and an expanded image of the face region of each of the persons can be acquired. A configuration of the shooting unit and a method of acquiring the three-dimensional data are not limited to the foregoing. For example, the three-dimensional data including the stereoscopic shape and the expanded image of the face region of the person may be acquired by using a stereo camera or a depth sensor.

The registration request unit 342 transmits a face information registration request including three-dimensional image data to the face information DB 200 via the network 500. Then, the registration request unit 342 receives a registration result from the face information DB 200.

### (Details of Face Information DB 200)

In the face information DB 200, image data including a face region of each of persons is registered. Specifically, for each of the persons, a person ID (a user ID) and image data (three-dimensional data in this example) of the person are registered in association in the face information DB 200. Examples of the persons registered in the face information DB 200 include a person with a criminal record and a person under investigation.

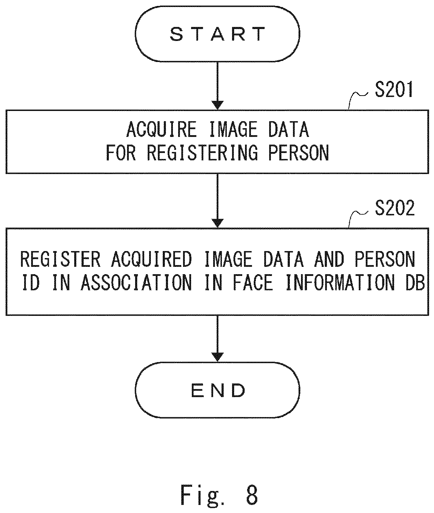

Fig. 8 is a flowchart illustrating a flow of face information registration processing in the face information DB 200. As illustrated in Fig. 8, the face information DB 200 first acquires image data included in a face information registration request from the face registration terminal 300 (step S201). Then, the face information DB 200 issues a person ID (user ID), and the person ID and the image data are registered in association in the face information DB 200 (step S202).

### (Details of Comparison Apparatus 100a)

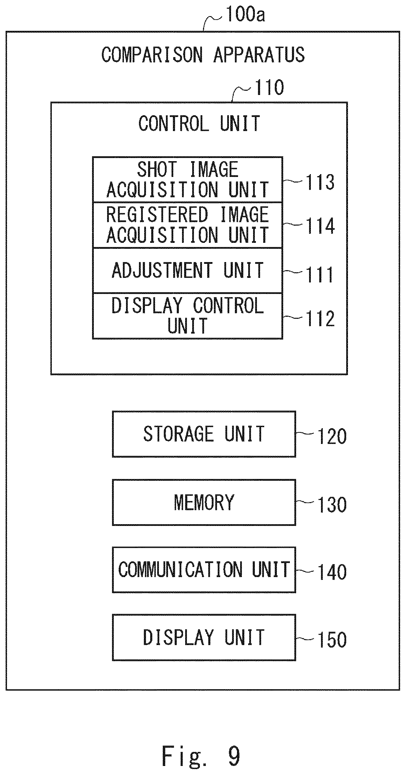

Fig. 9 is a block diagram illustrating a configuration example of the comparison apparatus 100a.

As illustrated in Fig. 9, the comparison apparatus 100a is a server apparatus to be implemented by a computer, for example, and includes a control unit 110, a storage unit 120, a memory 130, a communication unit 140, and a display unit 150.

The storage unit 120 is a storage device storing a program for implementing each of functions of the comparison apparatus 100a. The memory 130 is a storage region temporarily storing a processing content of the control unit 110, and an example of the memory 130 is a non-volatile storage device such as a RAM. The communication unit 140 is a communication interface with the network 500. The display unit 150 is a display device such as a monitor. The control unit 110 is a control device that controls an operation of the comparison apparatus 100a, for example, a processor such as a CPU. The control unit 110 reads the program read out of the storage unit 120 into the memory 130, and executes the program. As a result, the control unit 110 implements respective functions of an adjustment unit 111, a display control unit 112, a shot image acquisition unit 113, and a registered image acquisition unit 114.

The shot image acquisition unit 113 acquires via the network 500 a shot image of an inspection target person TG shot by the shooting unit 410 in the shooting apparatus 400. The shot image of the inspection target person TG acquired by the shot image acquisition unit 113 is two-dimensional data including a face region oriented in any direction.

The registered image acquisition unit 114 acquires via the network 500 image data on a candidate person RF extracted from the face information DB 200 as having a high possibility of being the same person as the inspection target person TG. The image data acquired by the registered image acquisition unit 114 is three-dimensional data including a stereoscopic shape and an expanded image of a face region of the candidate person RF. Although a case where extraction of a registered image of the candidate person RF is performed according to user's selection be described as an example in the present example embodiment, the extraction may be automatically performed using a face authentication apparatus.

The adjustment unit 111 adjusts a positional relationship between the shot image of the inspection target person TG acquired by the shot image acquisition unit 113 and the registered image, which is to be generated based on the image data (three-dimensional data) on the candidate person RF acquired by the registered image acquisition unit 114, of the candidate person RF.

For example, the adjustment unit 111 first compares a plurality of feature points P1 specified in the face region of the inspection target person TG extracted from the shot image and a plurality of feature points P1 specified in the face region of the candidate person RF extracted from the stereoscopic shape of the image data.

The feature point P1 is a site of a face region commonly used to specify a face orientation of a person, and examples of the feature point P1 include a nasal root point, a nasal apex point, an oral opening midline point, a right eye upper center point, a left eye upper center point, a right earlobe point, and a left earlobe point.

The adjustment unit 111 adjusts an orientation (position) of the stereoscopic shape of the candidate person RF such that the plurality of feature points P1 in the face region of the inspection target person TG extracted from the shot image and the plurality of feature points P1 in the face region of the candidate person RF extracted from the stereoscopic shape match each other. As a result, a registered image (two-dimensional data) of the candidate person RF oriented in the same direction as that of the inspection target person TG to be reflected on the shot image is generated.

A position of a visually recognizable feature point P2 to be specified in the face region of the candidate person RF is also adjusted as a face orientation of the candidate person RF to be reflected on the registered image is adjusted. The visually recognizable feature point P2 is a portion, which is formed in the face region of the candidate person RF, specific to the candidate person RF, and examples of the feature point P2 include a mole, a wrinkle, a spot, a freckle, a dimple, a wart, a wound, and a tattoo. The feature point P2 need not be included in the feature point P1 used to adjust a positional relationship.

The feature portion P1 in the face region of each of persons used in position adjustment by the adjustment unit 111 is not necessarily easy to visually confirm for humans. The feature portion P2 easy to visually confirm for humans is set as a highlighting display target, described below, to make it easy to determine whether or not the inspection target person TG is a specific person.

Although the type and the position of the feature point P2 may be registered in the face information DB 200 in association with the three-dimensional data on the candidate person RF, the some non-limiting embodiments are not limited to this. The type and the position of the feature point P2 may be acquired at any timing based on the three-dimensional data on the candidate person RF.

The display control unit 112 displays the shot image of the inspection target person TG and a mark MK representing the visually recognizable feature point P2 to be specified from the registered image of the candidate person RF the face orientation of which has been adjusted in an overlapping manner on the display unit 150.

The mark MK may be able to highlight the feature point P2, and examples of the mark MK to be used include a mark in a dotted line shape surrounding the feature point P2 and a mark in a shape and a pattern of the feature point P2 using a highlight color such as red. As the mark MK, a mark in a display format (a highlighting content) corresponding to the type of the feature point P2 may be used. For example, a red mark MK may be used for the feature point P2 "mole", and a blue mark MK may be used for the feature point P2 "wrinkle". It is easier to visually confirm which of a plurality of feature points P2 has been highlighted.

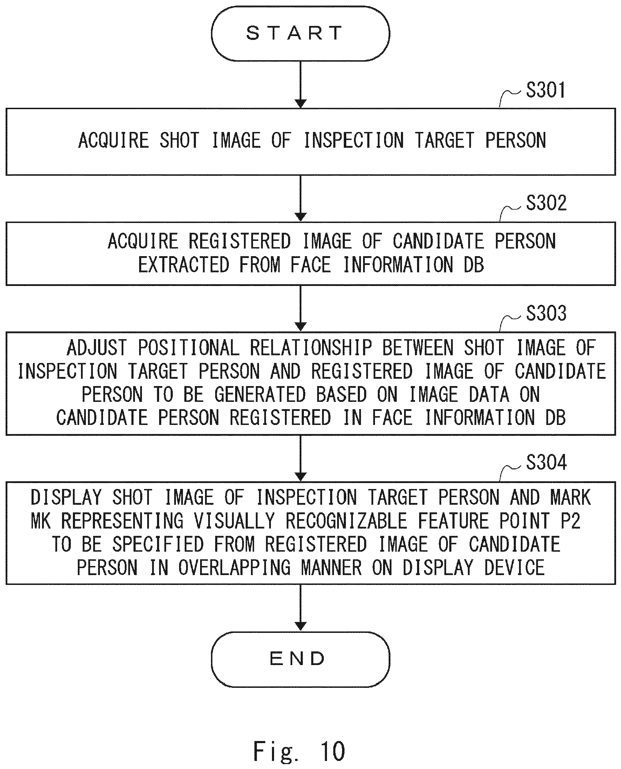

Fig. 10 is a flowchart illustrating an operation of the comparison apparatus 100a.

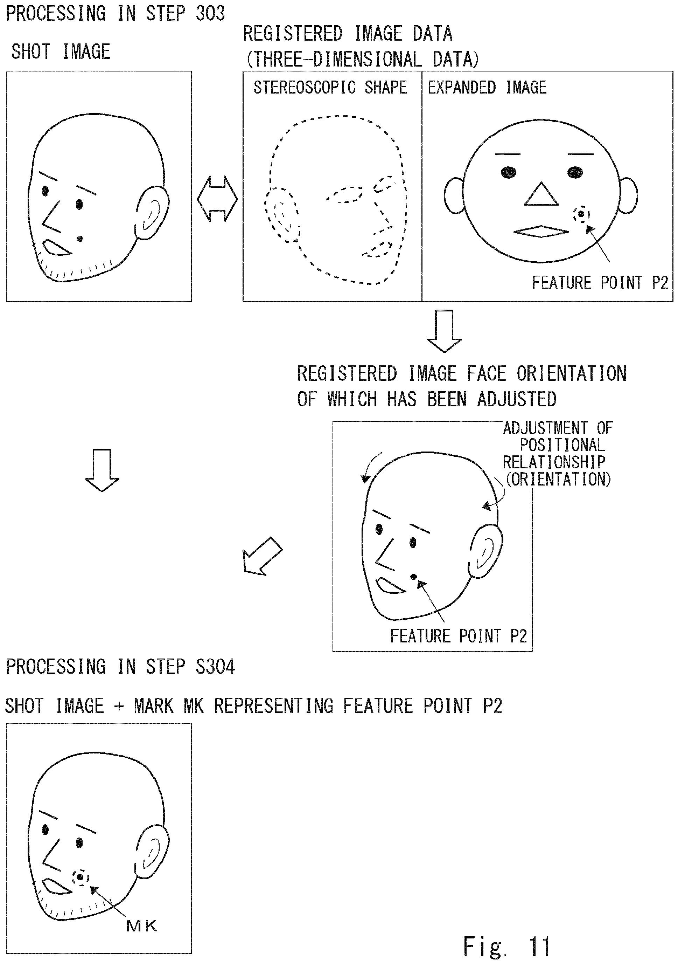

Fig. 11 is a conceptual diagram for describing comparison processing by the comparison apparatus 100a.

First, the shot image acquisition unit 113 acquires via the network 500 a shot image of an inspection target person TG shot by the shooting unit 410 in the shooting apparatus 400 (step S301). The shot image of the inspection target person TG acquired by the shot image acquisition unit 113 is two-dimensional data including a face region oriented in any direction.

Then, the registered image acquisition unit 114 acquires via the network 500 image data on a candidate person RF extracted from the face information DB 200 as having a high possibility of being the same person as the inspection target person TG (step S302). The image data acquired by the registered image acquisition unit 114 is three-dimensional data including a stereoscopic shape and an expanded image of a face region of the candidate person RF.

Then, the adjustment unit 111 adjusts a positional relationship between the shot image of the inspection target person TG acquired by the shot image acquisition unit 113 and a registered image, which is to be generated based on the image data on the candidate person RF acquired by the registered image acquisition unit 114, of the candidate person RF (step S303).

For example, the adjustment unit 111 first compares a plurality of feature points P1 specified in a face region of the inspection target person TG extracted from the shot image and a plurality of feature points P1 specified in a face region of the candidate person RF extracted from the stereoscopic shape of the image data.

Then, the adjustment unit 111 adjusts an orientation (position) of a stereoscopic shape of the candidate person RF such that the plurality of feature points P1 in the face region of the inspection target person TG extracted from the shot image and the plurality of feature points P1 in the face region of the candidate person RF extracted from the stereoscopic shape match each other. As a result, a registered image (two-dimensional data) of the candidate person RF oriented in the same direction as that of the inspection target person TG to be reflected on the shot image is generated.

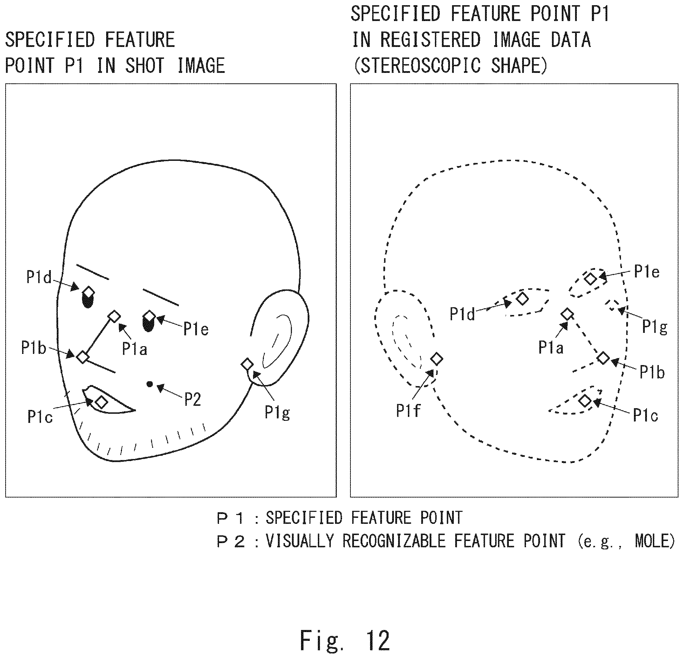

Fig. 12 is a diagram illustrating an example of a plurality of feature points P1.

Referring to Fig. 12, a nasal root point P1a, a nasal apex point P1b, an oral opening midline point P1c, a right eye upper center point P1d, a left eye upper center point P1e, a right earlobe point P1f, and a left earlobe point P1g are specified as a plurality of feature points P1, for example. At this time, the adjustment unit 111 adjusts an orientation of a stereoscopic shape of a candidate person RF such that the feature points P1a to P1g in a face region of an inspection target person TG extracted from a shot image and the feature points P1a to P1g in a face region of the candidate person RF extracted from the stereoscopic shape match each other.

Then, the display control unit 112 displays the shot image of the inspection target person TG and a mark MK representing a visually recognizable feature point P2 to be specified from a registered image of the candidate person RF a face orientation of which has been adjusted in an overlapping manner on the display unit 150 (step S304).

Thus, the comparison apparatus 100a and the comparison system 600 according to the present example embodiment display the shot image of the inspection target person TG and the mark MK representing the visually recognizable feature point (a mole, etc.) P2 of the candidate person RF to be specified from the registered image of the candidate person RF in an overlapping manner on a display device. This makes it easy to visually determine whether or not the inspection target person TG corresponds to a specific person (the candidate person RF in this example).

When three-dimensional data on a face region of each of persons is registered in the face information DB 200, the comparison apparatus 100a can perform comparison processing using not only a shot image of an inspection target person TG facing the front but also a shot image of an inspection target person TG oriented in any direction. Specifically, the comparison apparatus 100a can perform comparison processing using a shot image of the inspection target person TG shot by such a shooting apparatus 400 that persons are unaware of being shot, for example, a security camera.

Although a case where the face information DB 200 is provided outside the comparison apparatus 100a has been described in the present example embodiment, the some non-limiting embodiments are not limited to this. The face information DB 200 may be provided inside the comparison apparatus 100a.

The present disclosure makes it possible to implement any processing described as hardware processing by causing a CPU to execute a computer program.

In the above-described example, the program is stored using various types of non-transitory computer-readable media, and can be supplied to a computer. The non-transitory computer-readable medium includes various types of tangible storage media. Examples of the non-transitory computer-readable medium include a magnetic recording medium (e.g., a flexible disk, a magnetic tape, and a hard disk drive) and a magneto-optical recording medium (e.g., a magneto-optical disk). Examples of the non-transitory computer-readable medium include a CD-ROM (read only memory), a CD-R, a CD-R/W, a DVD (digital versatile disc), and a semiconductor memory (e.g., a mask ROM, a PROM (programmable ROM), an EPROM (erasable PROM), a flash ROM, and a RAM (random access memory)). The program may be supplied to a computer by various types of non-transitory computer-readable media. Examples of the transitory computer-readable medium include an electric signal, an optical signal, and an electromagnetic wave. The non-transitory computer-readable medium can supply the program to the computer via a wired communication path such as an electrical wire and an optical fiber or a wireless communication path.

The present disclosure is not limited to the above-described first and second example embodiments, and can appropriately be changed without departing from the spirit of the some non-limiting embodiments. The present disclosure may be implemented by appropriately combining the example embodiments.

Although a case where the extraction of the candidate person RF from the face information DB is performed according to user's selection be described as an example in the above-described first and second example embodiments, the some non-limiting embodiments are not limited to this. The extraction may be automatically performed using the face authentication apparatus. In the case, the face authentication apparatus compares the face feature information (a set of feature points) of the inspection target person TG extracted from the shot image of the shooting apparatus 400 and the face feature information, which is extracted from the registered image of each of the persons registered in the face information DB 200, of the person, for example, to perform face authentication. Specifically, the face authentication apparatus determines, when a degree of matching between the face feature information on the inspection target person TG extracted from the shot image and the face feature information on the certain person extracted from the registered image in the face information DB 200 is a predetermined value or more, that the possibility that the person is the same person as the inspection target person TG is high. The person that has been determined to have a high possibility of being the same person as the inspection target person TG is used as the candidate person RF for the comparison apparatus 100a.

Although a case where the comparison apparatus displays the shot image of the inspection target person TG and the mark MK representing the visually recognizable feature point P2 of the candidate person RF to be specified from the registered image of the candidate person RF in an overlapping manner on the display device has been described in the above-described first and second example embodiments, the some non-limiting embodiments are not limited to this. The comparison apparatus (more specifically, the display control unit) may be configured to be able to partially display the mark MK by a wiping operation, or may be configured to be able to change a transparency of the mark MK. When the mark MK is made partially displaceable by the wiping operation, or the transparency of the mark MK is made changeable, it can be easier to visually confirm the feature portion P2.

Alternatively, the comparison apparatus may further display the registered image of the candidate person RF, in addition to the shot image of the inspection target person TG and the mark MK, in an overlapping manner on the display device. In this case, the comparison apparatus may be configured to be able to partially display the respective registered images of the mark MK and the candidate person RF by a wiping operation, or may be configured to be able to change the respective transparencies of the registered images of the mark MK and the candidate person RF. When the respective registered images of the mark MK and the candidate person RF are made partially displaceable by the wiping operation, or the respective transparencies of the registered images of the mark MK and the candidate person RF are made changeable, a visually recognizable difference between the inspection target person TG and the candidate person RF is clearer.

Further, the comparison apparatus (more specifically, the display control unit) according to the above-described first and second example embodiments may be configured to be able to display the mark MK representing the feature point P2 (a mole, etc.) formed in a region (i.e., a hidden region) not to be displayed in the shot image in the face region of the inspection target person TG. In this case, the mark MK representing the feature point P2 formed in the face region not to be displayed in the shot image is displayed in a different display format from that of the other mark MK. As a result, the mark MK can be used for a reference in further extracting the candidate person RF from the face information DB.

Although a part or the whole of the above-mentioned embodiments can also be described as in the following supplementary note, the some non-limiting embodiments are not limited to the following.

### (Supplementary note 1)

A comparison apparatus comprising:
adjustment means for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data; and
display control means for displaying the shot image of the inspection target person and a mark representing a visually recognizable second feature point to be specified from the registered image of the person in an overlapping manner on a display device.

### (Supplementary note 2)

The comparison apparatus described in Supplementary note 1, wherein
three-dimensional data including a stereoscopic shape and an expanded image of the face region of the person is registered as the image data in the database, and
the adjustment means is configured to generate, after comparing the plurality of first feature points specified in the face region of the inspection target person extracted from the shot image and the plurality of first feature points specified in the face region of the person to be extracted from the three-dimensional data, the registered image of the person a face orientation of which has been adjusted based on a result of the comparison.

### (Supplementary note 3)

The comparison apparatus described in Supplementary note 2, wherein the adjustment means is configured to generate the registered image of the person the face orientation of which has been adjusted such that the plurality of first feature points specified in the face region of the inspection target person extracted from the shot image and the plurality of first feature points specified in the face region of the person to be extracted from the three-dimensional data match each other.

### (Supplementary note 4)

The comparison apparatus described in any one of Supplementary notes 1 to 3, wherein the second feature point differs from the first feature points.

### (Supplementary note 5)

The comparison apparatus described in any one of Supplementary notes 1 to 4, wherein the second feature point is at least one of a mole, a wrinkle, a spot, a freckle, a dimple, a wart, a wound, and a tattoo.

### (Supplementary note 6)

The comparison apparatus described in any one of Supplementary notes 1 to 5, wherein the second feature point includes a contour of a face region and a shape of a bridge of a nose.

### (Supplementary note 7)

The comparison apparatus described in any one of Supplementary notes 1 to 6, wherein the display control means displays the mark in a display format corresponding to a type of the second feature point.

### (Supplementary note 8)

The comparison apparatus described in any one of Supplementary notes 1 to 7, wherein the display control means is configured to be able to partially display the mark by a wiping operation.

### (Supplementary note 9)

The comparison apparatus described in any one of Supplementary notes 1 to 8, wherein the display control means is configured to be able to change a transparency of the mark.

### (Supplementary note 10)

The comparison apparatus described in any one of Supplementary notes 1 to 9, wherein the display control means is configured to be able to display the mark representing the second feature point formed in a region not to be displayed in the shot image in the face region of the inspection target person.

### (Supplementary note 11)

The comparison apparatus described in any one of Supplementary notes 1 to 10, wherein the display control means is configured to be able to display the registered image of the person, in addition to the shot image of the inspection target person and the mark, in an overlapping manner.

### (Supplementary note 12)

The comparison apparatus described in Supplementary note 11, wherein the display control means is configured to be able to partially display the mark and the registered image of the person by a wiping operation.

### (Supplementary note 13)

The comparison apparatus described in Supplementary note 11, wherein the display control means is configured to be able to change respective transparencies of the mark and the registered image of the person by a wiping operation.

### (Supplementary note 14)

The comparison apparatus described in any one of Supplementary notes 1 to 13, further comprising the database.

### (Supplementary note 15)

The comparison apparatus described in any one of Supplementary notes 1 to 14, further comprising the display device.

### (Supplementary note 16)

A comparison system comprising:
a shooting apparatus configured to shoot the face region of the inspection target person; and
the comparison apparatus described in Supplementary note 1.

### (Supplementary note 17)

A comparison method comprising:
an adjustment step of comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data; and
a display control step of displaying the shot image of the inspection target person and a mark representing a visually recognizable second feature point to be specified from the registered image of the person in an overlapping manner on a display device.

### (Supplementary note 18)

The comparison method described in Supplementary note 17, wherein
three-dimensional data including a stereoscopic shape and an expanded image of the face region of the person is registered as the image data in the database, and
the adjustment step includes generating, after comparing the plurality of first feature points specified in the face region of the inspection target person extracted from the shot image and the plurality of first feature points specified in the face region of the person to be extracted from the three-dimensional data, the registered image of the person a face orientation of which has been adjusted based on a result of the comparison.

### (Supplementary note 19)

A non-transitory computer-readable medium storing a comparison program for performing:
adjustment processing for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data; and
display control processing for displaying the shot image of the inspection target person and a mark representing a visually recognizable second feature point to be specified from the registered image of the person in an overlapping manner on a display device.

### (Supplementary note 20)

The non-transitory computer-readable recording medium storing the comparison program described in Supplementary note 19, wherein
three-dimensional data including a stereoscopic shape and an expanded image of the face region of the person is registered as the image data in the database, and
the adjustment processing includes generating, after comparing the plurality of first feature points specified in the face region of the inspection target person extracted from the shot image and the plurality of first feature points specified in the face region of the person to be extracted from the three-dimensional data, the registered image of the person a face orientation of which has been adjusted based on a result of the comparison.

Although the present invention has been described above with reference to the example embodiments, the present invention is not limited to the above-described embodiments. A configuration and details of the present invention can be subjected to various changes that can be understood by those skilled in the art within the scope of the present invention.

### Reference Signs List

100 COMPARISON APPARATUS
100A COMPARISON APPARATUS
110 CONTROL UNIT
111 ADJUSTMENT UNIT
112 DISPLAY CONTROL UNIT
13 SHOT IMAGE ACQUISITION UNIT
114 REGISTERED IMAGE ACQUISITION UNIT
120 STORAGE UNIT
130 MEMORY
140 COMMUNICATION UNIT
150 DISPLAY UNIT
200 FACE INFORMATION DB
300 FACE REGISTRATION TERMINAL
310 SHOOTING UNIT
320 STORAGE UNIT
330 COMMUNICATION UNIT
340 CONTROL UNIT
341 SHOOTING CONTROL UNIT
342 REGISTRATION REQUEST UNIT
400 SHOOTING APPARATUS
410 SHOOTING UNIT
420 STORAGE UNIT
430 COMMUNICATION UNIT
440 CONTROL UNIT
441 SHOOTING CONTROL UNIT
500 NETWORK
600 COMPARISON SYSTEM
MK MARK
P1 FEATURE POINT
P2 FEATURE POINT
RF CANDIDATE PERSON
TG INSPECTION TARGET PERSON

## Claims

1. A comparison apparatus comprising:
adjustment means for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data; and
display control means for displaying the shot image of the inspection target person and a mark representing a visually recognizable second feature point to be specified from the registered image of the person in an overlapping manner on a display device.

2. The comparison apparatus according to Claim 1, wherein
three-dimensional data including a stereoscopic shape and an expanded image of the face region of the person is registered as the image data in the database, and
the adjustment means is configured to generate, after comparing the plurality of first feature points specified in the face region of the inspection target person extracted from the shot image and the plurality of first feature points specified in the face region of the person to be extracted from the three-dimensional data, the registered image of the person a face orientation of which has been adjusted based on a result of the comparison.

3. The comparison apparatus according to Claim 2, wherein the adjustment means is configured to generate the registered image of the person the face orientation of which has been adjusted such that the plurality of first feature points specified in the face region of the inspection target person extracted from the shot image and the plurality of first feature points specified in the face region of the person to be extracted from the three-dimensional data match each other.

4. The comparison apparatus according to any one of Claims 1 to 3, wherein the second feature point differs from the first feature points.

5. The comparison apparatus according to any one of Claims 1 to 4, wherein the second feature point is at least one of a mole, a wrinkle, a spot, a freckle, a dimple, a wart, a wound, and a tattoo.

6. The comparison apparatus according to any one of Claims 1 to 5, wherein the second feature point includes a contour of a face region and a shape of a bridge of a nose.

7. The comparison apparatus according to any one of Claims 1 to 6, wherein the display control means displays the mark in a display format corresponding to a type of the second feature point.

8. The comparison apparatus according to any one of Claims 1 to 7, wherein the display control means is configured to be able to partially display the mark by a wiping operation.

9. The comparison apparatus according to any one of Claims 1 to 8, wherein the display control means is configured to be able to change a transparency of the mark.

10. The comparison apparatus according to any one of Claims 1 to 9,
wherein the display control means is configured to be able to display the mark representing the second feature point formed in a region not to be displayed in the shot image in the face region of the inspection target person.

11. The comparison apparatus according to any one of Claims 1 to 10,
wherein the display control means is configured to be able to display the registered image of the person, in addition to the shot image of the inspection target person and the mark, in an overlapping manner.

12. The comparison apparatus according to Claim 11, wherein the display control means is configured to be able to partially display the mark and the registered image of the person by a wiping operation.

13. The comparison apparatus according to Claim 11, wherein the display control means is configured to be able to change respective transparencies of the mark and the registered image of the person by a wiping operation.

14. The comparison apparatus according to any one of Claims 1 to 13, further comprising the database.

15. The comparison apparatus according to any one of Claims 1 to 14, further comprising the display device.

16. A comparison system comprising:
a shooting apparatus configured to shoot the face region of the inspection target person; and
the comparison apparatus according to Claim 1.

17. A comparison method comprising:
an adjustment step of comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data; and
a display control step of displaying the shot image of the inspection target person and a mark representing a visually recognizable second feature point to be specified from the registered image of the person in an overlapping manner on a display device.

18. The comparison method according to Claim 17, wherein
three-dimensional data including a stereoscopic shape and an expanded image of the face region of the person is registered as the image data in the database, and
the adjustment step includes generating, after comparing the plurality of first feature points specified in the face region of the inspection target person extracted from the shot image and the plurality of first feature points specified in the face region of the person to be extracted from the three-dimensional data, the registered image of the person a face orientation of which has been adjusted based on a result of the comparison.

19. A non-transitory computer-readable medium storing a comparison program for performing:
adjustment processing for comparing a plurality of first feature points specified in a face region, which is extracted from a shot image obtained by shooting an inspection target person, of the inspection target person and a plurality of first feature points specified in a face region, which is extracted from image data on a person registered in a database, of the person and adjusting a positional relationship between the shot image of the inspection target person and a registered image of the person to be generated based on the image data; and
display control processing for displaying the shot image of the inspection target person and a mark representing a visually recognizable second feature point to be specified from the registered image of the person in an overlapping manner on a display device.

20. The non-transitory computer-readable recording medium storing the comparison program according to Claim 19, wherein
three-dimensional data including a stereoscopic shape and an expanded image of the face region of the person is registered as the image data in the database, and
the adjustment processing includes generating, after comparing the plurality of first feature points specified in the face region of the inspection target person extracted from the shot image and the plurality of first feature points specified in the face region of the person to be extracted from the three-dimensional data, the registered image of the person a face orientation of which has been adjusted based on a result of the comparison.
